Europäisches Patentamt

European Patent Office

Office européen des brevets

(11) Veröffentlichungsnummer: **0 409 097 A2**

# EUROPÄISCHE PATENTANMELDUNG

(21) Anmeldenummer: **90113407.2**

(22) Anmeldetag: **13.07.90**

(51) Int. Cl.5: **C08L 95/00**

(30) Priorität: **18.07.89 DE 3923693**

(43) Veröffentlichungstag der Anmeldung:
**23.01.91 Patentblatt 91/04**

(84) Benannte Vertragsstaaten:
**AT BE CH DE DK ES FR GB GR IT LI LU NL SE**

(71) Anmelder: **DEUCOL EMULSIONSTECHNIK GMBH**
**Siegburger Strasse 229**
**D-5000 Köln 21(DE)**

(72) Erfinder: **Glet, Walther, Dr.**
**Fasanenring 15**
**D-2105 Seevetal 2(DE)**

(74) Vertreter: **von Kreisler, Alek, Dipl.-Chem. et al**
**Patentanwälte Von Kreisler-Selting-Werner,**
**Deichmannhaus am Hauptbahnhof**
**D-5000 Köln 1(DE)**

(54) **Bitumenemulsion für umweltfreundliches Recycling von pechhaltigem Ausbauasphalt.**

(57) Die Erfindung betrifft eine Bitumenemulsion für umweltfreundliches Recycling von pechhaltigem Ausbauasphalt, dadurch gekennzeichnet, daß dieser Bitumenemulsion kationische Emulgatoren und Natur- oder Synthesekautschuk oder Kunstharzdispersionen zugesetzt sind.

Die Erfindung betrifft ferner ein Verfahren für das umweltfreundliche Recycling von Ausbauasphalt unter Verwendung dieser Bitumenemulsion.

EP 0 409 097 A2

# BITUMENEMULSION FÜR UMWELTFREUNDLICHES RECYCLING VON PECH-HALTIGEM AUSBAUASPHALT

Die Erfindung betrifft eine Bitumenemulsion zum umweltfreundlichen Recycling von pechhaltigem Ausbauasphalt sowie ein Verfahren hierzu.

Bis 1987 wurden Steinkohlenteere und Teerpeche als Bindemittel aufgrund gewisser Vorteile in großem Umfang im Straßenbau verwendet. Diese Teere wurden in allen Bereichen des bituminösen Schichtenaufbaus eingesetzt, z.B. als Tränkspritzung (Flüssigteere) mit hohem Weichmacher und Ölanteil, als Reinbindemittel für Sand (Teersand), als Carbobitumen im Gemisch mit Bitumen in Trag-, Binder- und Deckschichten, als PVC-Teer für heiß gespritzte Oberflächenbehandlungen und als Teerschlämme (emulgiertes Teerpech) für Antipetrolbeschichtung auf Asphalt.

Es hat sich jedoch herausgestellt, daß sie zwei Kategorien stark umweltbelastender Stoffe enthalten, die an Wasser und Luft abgegeben werden und somit das Grundwasser und die Atmosphäre belasten. Bei diesen Stoffen handelt es sich zum einen um polycyclische aromatische Kohlenwasserstoffe (polycyclic aromatic hydrocarbons; PAH) sowie um Phenole. Solange die Pechprodukte in den unteren Schichten des Straßenaufbaus eingeschlossen waren, haben sie keinen merklichen Einfluß auf die Umwelt, z.B. auf das Grundwasser gehabt, da durch die oberen Schichten der Zutritt von Wasser und Luft gehindert wurde. An der Straßenoberfläche liegende Schichten haben jedoch die Bestandteile an die Luft und an das Regenwasser abgegeben. So sind auch PAH im Sandmaterial an den Rändern von Straßen, die mit Pechprodukten beschichtet worden waren, verstärkt nachgewiesen worden, nicht dagegen im Boden unter Teer enthaltenden Straßen.

Im Zuge von Straßenerneuerungen müssen die gesamten gebundenen Schichten aufgenommen werden. Dabei kommen die pechhaltigen Mischgüter wieder zutage, wobei das Pech in unveränderter Beschaffenheit vorliegt. Durch den nun fehlenden Schutz der dichten Bindung ist das aufgebrochene Material für den freien Zutritt von Luft und Wasser zugänglich. Schadstoffe wie Phenole und PAH werden an die Umwelt abgegeben. Aus diesem Grund ist die Lagerung und Wiederverwendung dieser Materialien problematisch.

DE-OS 37 29 507 beschreibt die Einkapselung von pechhaltigem Ausbauasphalt durch hydraulische Bindung, z. B. Zement. Hierdurch kann unter gewissen Bedingungen eine Reduzierung der PAH-Freisetzung erreicht werden, jedoch wird wegen der Löslichkeit von Phenolen im basischen Milieu die Freisetzung der Phenole sogar noch erhöht. Durch das sehr starre Abbinden von Zement führt die Setzung und Bewegung eingebauter Schichten zu Rißbildungen, wodurch die eingekapselten Schadstoffe erneut an die Umwelt abgegeben werden können.

DE-OS 37 03 775 beschreibt die Einkapselung mit Bitumen. Dieses ist nur mit Bitumenemulsion möglich, da durch das Heißmischverfahren die Teerbestandteile schmelzen und sich voll mit dem neuen Bitumen mischen, wodurch sie dann wieder zugänglich an der Oberfläche liegen. Außerdem werden beim Mischvorgang selbst große Dampfmengen aus dem Teermaterial freigesetzt und an die Atmosphäre abgegeben.

Der Erfindung liegt die Aufgabe zugrunde, der Erweichung des Bitumens durch den Teer entgegenzuwirken und somit die Abgabe von Schadstoffen an die Umwelt durch den eingekapselten Ausbauasphalt weiter zu senken, so daß dabei ein wiederverwendbarer Straßenbaustoff entsteht, der den Vorschriften entspricht.

Erfindungsgemäß wurde die Aufgabe gelöst durch eine Bitumenemulsion für umweltfreundliches Recycling von pechhaltigem Ausbauasphalt, die dadurch gekennzeichnet ist, daß dieser Bitumenemulsion kationische Emulgatoren und Natur- oder Synthesekautschuk- oder Kunstharzdispersionen zugesetzt sind.

Als Synthesekautschuk eingesetzt werden können Styrol-Butadien-Styrol (SBS), Styrol-Butadien-Kautschuk (SBR), natürliches oder synthetisches Polyisopren, Polybutadien, Polychloropren (CR), Acrylnitril-Butadien-Kautschuk, Butyl-Kautschuk, Propylen-Kautschuk oder Gemische davon. Bevorzugt werden SBS, SBR, CR, Acrylnitril-Butadien.

Des weiteren können auch Kunstharzdispersionen, bestehend aus Polyacrylat oder Polyacrylnitril eingesetzt werden.

Eine erfindungsgemäße Bitumenemulsion wird dadurch erhalten, daß man den Natur- oder Synthesekautschuk oder die Kunstharzdispersion dem Bitumen zusetzt und anschließend in Gegenwart kationischer Emulgatoren die Emulsion herstellt.

Eine weitere Möglichkeit besteht darin, eine kationische Emulgatoren enthaltende Emulsion (Dispersion) aus Natur- oder Synthesekautschuk (Latex) oder einer Kunstharzdispersion dem Bitumen, das ebenfalls in Gegenwart kationischer Emulgatoren emulgiert wurde, zuzusetzen. Der Anteil des Natur- oder Synthesekautschuks oder der Kunstharzdispersion in der Bitumenemulsion beträgt 1 bis 20 Gew.-%, vorzugsweise jedoch 8 bis 13 Gew.-%.

Die Erfindung umfaßt ferner ein Verfahren für das umweltfreundliche Recycling von Ausbauasphalt, der durch Abfräsen und/oder Abheben von Verkehrsflächen durch Zerkleinern als Asphaltgranulat erhalten wird und mit einer zur Umhüllung des Granulats ausreichenden Menge einer erfindungsgemäßen Bitumenemulsion gemischt wird. Diese, einen Synthesekautschuk oder eine Kunstharzdispersion enthaltende Bitumenemulsion kann hergestellt werden durch Zugabe des Natur- oder Synthesekautschuks oder der Kunstharzdispersion zum Bitumen und anschließendem Emulgieren in Gegenwart eines kationischen Emulgators oder durch Zugabe einer kationische Emulgatoren enthaltenden Emulsion oder Dispersion aus Natur- oder Synthesekautschuk (Latex) oder Kunstharzdispersion zu einer ebenfalls kationische Emulgatoren enthaltenden Bitumenemulsion.

Das aus pechhaltigem Ausbauasphalt gewonnene Granulat wird mit 0 bis 10 Gew.-% Wasser und anschließend mit 1 bis 10 Gew.-%, vorzugsweise 4 Gew.-% des erfindungsgemäßen Emulsionsgemisches versetzt.

Durch die Gegenwart der Polymeren in dem Bitumen, welches zur Umhüllung der pechhaltigen Ausbauasphalte eingesetzt wird, werden weniger PAH und Phenol an die Umwelt abgegeben, als bei reinem Bitumen, was durch das hohe Adsorptionsvermögen der Kautschuke für die im Teer enthaltenden Aromaten erklärt wird. Dies wird durch folgende Beobachtungen gestützt: Durch Mischung einer Teeremulsion mit Latex, der Polyacrylnitril-Copolymere enthält (z.B. Perbunan N) wird eine Quellung der Latexteilchen unter Erweichung mit gleichzeitiger Erhärtung der Teeranteile erzielt. Aus dem Teer, der in kleinen Tröpfchen vorliegt, und eine große Oberfläche besitzt, diffundieren aromatische Öle über die Wasserphase in den Kautschuk, der sich gleichzeitig grünlich verfärbt. Daraus ist zu schließen, daß der Kautschuk ein hohes Adsorptionsvermögen für die Aromaten besitzt. Zur Bestätigung kann durch Vergleichsexperimente gezeigt werden, daß identische Lösungen von Bitumen in Toluol oder Xylol unter gleichen Bedingungen in einer reproduzierbaren Trockenzeit abtrocknen. Wird dieser Lösung ein Kautschuk zugemischt, so verlängert sich unter identischen Versuchsbedingungen die Trockenzeit erheblich. Dieses Phänomen kann als Lösungsmittelretention bezeichnet werden.

Die hohe Affinität dieser Kautschuke gegenüber PAH und Phenol bewirkt, daß der durch Wasser eluierbare Anteil an PAH etwa 1/100 bis 1/100stel im Vergleich mit der Nullprobe gesenkt werden konnte. Eine Bitumenemulsion ohne Zusätze bewirkt nur eine Reduzierung auf 1/10 bis 1/100stel.

Beispiel

90 % einer kationischen Bitumenemulsion werden mit 10 % eines kationischen Latex gemischt, der ein Copolymer aus Butadien und Acrylnitril enthält. Dieses Emulsionsgemisch wird anschließend zur Umhüllung des pechhaltigen Ausbauasphaltes verwendet, wozu 100 Teile des Ausbaugranulates mit ca. 5 Teilen Wasser versetzt und gleichmäßig verteilt werden. Dann werden 4 Gew.-Teile des Emulsionsgemisches zugegeben und sofort vermischt. Die Emulsion bricht nach 30 bis 300 sec und umhüllt das Granulat mit dem teerhaltigen Bindemittel vollständig. Der Bindemittelfilm bleibt auch bei längerem Mischprozeß auf der Oberfläche der umhüllten Teile erhalten.

## Ansprüche

1. Bitumenemulsion für umweltfreundliches Recycling von pechhaltigem Ausbauasphalt, dadurch gekennzeichnet, daß dieser Bitumenemulsion kationische Emulgatoren und Synthesekautschuk oder Kunstharzdispersionen zugesetzt sind.

2. Bitumenemulsion nach Anspruch 1, dadurch gekennzeichnet daß als Synthesekautschuk Styrol-Butadien-Styrol, Styrol-Butadien-Kautschuk, Polyisopren, Polybutadien, Polychloropren, Acrylnitril-Butadien-Kautschuk, Butyl-Kautschuk, Propylen-Kautschuk oder Gemische davon eingesetzt werden.

3. Bitumenemulsion nach Anspruch 1, dadurch gekennzeichnet, daß als Kunstharzdispersion Polyacrylat oder Polyacrylnitril oder Gemische daraus eingesetzt werden.

4. Bitumenemulsion nach Anspruch 1 bis 3, dadurch gekennzeichnet, daß Synthesekautschuk oder die Kunstharzdispersion vor dem Emulgieren des Bitumens zugesetzt wird.

5. Bitumenemulsion nach Anspruch 1 bis 3, dadurch gekennzeichnet daß eine kationische Emulgatoren enthaltende Emulsion aus Synthesekautschuk (Latex) oder einer Kunstharzdispersion nach dem Emulgieren des Bitumens zugesetzt wird.

6. Bitumenemulsion nach Anspruch 1 bis 5, dadurch gekennzeichnet, daß der Anteil des Synthesekautschuks oder der Kunstharzdispersion in der Bitumenemulsion 1 bis 20 Gew.-%, vorzugsweise 8 bis 13 Gew.-% beträgt.

7. Verfahren für das umweltfreundliche Recycling von pechhaltigem Ausbauasphalt, der durch Abfräsen und/oder Abheben von Verkehrsflächen durch Zerkleinern als Asphaltgranulat erhalten wird und mit einer zur Umhüllung des Granulats ausreichenden Menge Bitumenemulsion vermischt wird, dadurch gekennzeichnet, daß die Bitumenemulsion einen kationischen Emulgator und vor dem Emulgieren zugesetzten Synthesekautschuk oder eine Kunstharzdispersion oder nach dem Emulgieren zugesetzte, kationische Emulgatoren enthaltenden Synthesekautschuk oder eine Kunstharzdispersion enthält.

8. Verfahren nach Anspruch 7, dadurch gekennzeichnet, daß das Granulat mit 0 bis 10 Gew.-% Wasser und 1 bis 10 Gew.-%, vorzugsweise 4 Gew.-% des Emulsionsgemisches vermischt werden.